# EUROPÄISCHE PATENTSCHRIFT

(11) **EP 2 565 473 B1**
(45) Veröffentlichungstag und Bekanntmachung des Hinweises auf die Patenterteilung: **16.04.2014**
(21) Anmeldenummer: 11179988.8
(22) Anmeldetag: 05.09.2011
(51) Int. Cl.: F16F 15/28

(54) **Brennkraftmaschine mit Kurbeltrieb und Verfahren zum Herstellen der Kurbelwelle einer derartigen Brennkraftmaschine**
Internal combustion engine having a crankshaft and method of manufacturing a crankshaft of such an internal combustion engine
Moteur à combustion interne doté d'un vilebrequin et procédé de fabrication du vilebrequin d'un tel moteur à combustion interne

(43) Veröffentlichungstag der Anmeldung: 06.03.2013
(73) Patentinhaber: Ford Global Technologies, LLC, Dearborn, MI 48126 (US)
(72) Erfinder: Weiss, Edwin, 51647 Gummersbach (DE)
(74) Vertreter: Drömer, Hans-Carsten

(56) Entgegenhaltungen:
- BE-A- 457 165
- CH-A- 383 083

## Beschreibung

Die Erfindung betrifft eine Brennkraftmaschine mit mindestens einem Zylinder und einer zu einem Kurbeltrieb gehörenden hohl ausgeführten Kurbelwelle, welche für jeden Zylinder eine dem Zylinder zugehörige Kurbelwellenkröpfung und mindestens zwei der Lagerung dienende definierte Wellenabschnitte, die entlang der Längsachse der Kurbelwelle beabstandet zueinander angeordnet sind, aufweist, wobei jede Kurbelwellenkröpfung zwei zueinander beabstandete und mittels Pleuellagerzapfen verbundene Kurbelwangen aufweist und jede an einen Wellenabschnitt angrenzende Kurbelwange eine dem Wellenabschnitt zugewandte, ebene und im Rahmen der Bearbeitung des Wellenabschnitts ausgebildete Seitenfläche aufweist, die senkrecht zur Längsachse verläuft und die Kurbelwelle in Gestalt eines in Umfangsrichtung verlaufenden ringförmigen Bandes umschließt.

Des Weiteren betrifft die Erfindung ein Verfahren zum Herstellen der Kurbelwelle einer derartigen Brennkraftmaschine.

Aufgrund der begrenzten Vorkommen an Mineralöl als Rohstoff für die Gewinnung von Brennstoffen für den Betrieb von Brennkraftmaschinen ist man ständig bemüht, das Gewicht einer Brennkraftmaschine durch konstruktive Maßnahmen zu reduzieren, um den Kraftstoffverbrauch zu minimieren. Die Ausführung der Kurbelwelle als hohle Kurbelwelle ist eine Maßnahme, die im Hinblick auf eine Gewichtsreduzierung zielführend ist. Auch die Brennkraftmaschine, die Gegenstand der vorliegenden Erfindung ist, verfügt über mindestens eine hohle Kurbelwelle.

Eine Kurbelwelle weist für jeden Zylinder der Brennkraftmaschine eine Kurbelwellenkröpfung auf und verfügt über mindestens zwei Wellenabschnitte, die entlang der Längsachse der Kurbelwelle beabstandet zueinander angeordnet sind und der Lagerung der Welle dienen. Jede Kurbelwellenkröpfung umfaßt zwei zueinander beabstandete Kurbelwangen, die mittels Pleuellagerzapfen miteinander verbunden sind.

Im Rahmen der vorliegenden Erfindung wird eine Kurbelwelle als hohle Kurbelwelle bezeichnet, wenn mindestens ein Wellenabschnitt oder mindestens ein Pleuellagerzapfen hohl ausgeführt ist, d. h. nicht aus Vollmaterial gefertigt ist, sondern vielmehr einen Hohlraum umfaßt. Dabei sind Versorgungskanäle, die beispielsweise der Versorgung der Kurbelwellenlager bzw. Pleuellager mit Öl dienen, keine Hohlräume im vorstehenden Sinne, da diesen eine Funktion zugewiesen ist, die über die reine Einsparung von Material hinausgeht.

Die Verwendung hohler Kurbelwellen hat über die Gewichtsreduzierung hinaus weitere Vorteile, insbesondere im Hinblick auf die Geräuschemissionen und den Massenausgleich.

Jeder Zylinder einer Brennkraftmaschine verfügt über einen in einem Zylinderrohr geführten, axial beweglichen Kolben, der zusammen mit dem Zylinderrohr und dem Zylinderkopf den Brennraum eines Zylinders begrenzt. Der Kolben dient der Übertragung der durch die Verbrennung generierten Gaskräfte auf die Kurbelwelle. Dabei wird die oszillierende Hubbewegung der Kolben in eine rotierende Drehbewegung der Kurbelwelle transformiert. Hierzu ist der Kolben mittels eines Kolbenbolzens mit einer Pleuelstange gelenkig verbunden, die wiederum an einem Pleuellagerzapfen einer Kurbelwellenkröpfung der Kurbelwelle beweglich gelagert ist. Die Kurbelwelle einschließlich der Kolben, der Kolbenbolzen und der Pleuelstangen wird auch als Kurbeltrieb bezeichnet.

Die im Kurbelgehäuse gelagerte Kurbelwelle nimmt die Pleuelstangenkräfte auf, die sich aus den Gaskräften infolge der Kraftstoffverbrennung im Brennraum und den Massenkräften infolge der ungleichförmigen Bewegung der Triebwerksteile zusammensetzen.

Die Kurbelwelle wird durch die sich zeitlich verändernden Drehkräfte, welche über die Pleuelstangen in die Kurbelwelle eingeleitet werden, zu Drehschwingungen angeregt. Diese Drehschwingungen führen sowohl zu Geräuschen durch Körperschallabstrahlung als auch zu Geräuschen durch Körperschalleinleitung in die Karosserie und in die Brennkraftmaschine.

Auch aufgrund der Erkenntnis, dass die Kaufentscheidung der Kunden beim Erwerb eines Fahrzeuges nicht unwesentlich und in zunehmendem Umfang sogar maßgeblich vom Geräusch der Brennkraftmaschine bzw. des Fahrzeugs mit beeinflußt wird, erlangen Schwingungen bei der Konstruktion und Auslegung von Kraftfahrzeugen und Brennkraftmaschinen zunehmend an Bedeutung.

Die Drehschwingungen der Kurbelwelle werden über den Nockenwellenantrieb auf die Nockenwelle übertragen, wobei die Nockenwelle selbst auch ein schwingungsfähiges System darstellt und weitere Systeme, insbesondere den Ventiltrieb, zu Schwingungen anregen kann. Zudem werden die Schwingungen der Kurbelwelle in den Antriebsstrang eingeleitet, über welchen eine Weiterleitung bis hin zu den Reifen eines Fahrzeuges erfolgen kann.

Bei Anregung der Kurbelwelle im Eigenfrequenzbereich kann es zu hohen Drehschwingungsamplituden kommen, die sogar zum Dauerbruch führen können. Dies zeigt, dass die Schwingungen nicht nur in Zusammenhang mit einem Geräuschdesign von Interesse sind, sondern vielmehr auch im Hinblick auf die Festigkeit der Kurbelwelle.

Aufgrund der hohen dynamischen Belastung der Kurbelwelle durch die Massen- und Gaskräfte sind die Konstrukteure bei der Auslegung der Brennkraftmaschine bemüht, einen möglichst weitgehenden, d. h. optimierten Massenausgleich zu realisieren. Dabei werden unter dem Begriff "Massenausgleich" sämtliche Maßnahmen zusammengefaßt, die die Wirkung der Massenkräfte nach außen kompensieren bzw. verringern. Insofern betrifft der Massenausgleich nicht nur die Massenkräfte als solche, sondern auch die durch die Massenkräfte hervorgerufenen Momente.

In diesem Zusammenhang besteht ein Lösungsansatz in der gezielten Abstimmung der Kröpfung der Kurbelwelle, der Anzahl und der Anordnung der Zylinder und der Zündfolge in der Weise, dass ein möglichst optimaler Massenausgleich erzielt wird.

Ein Sechs-Zylinder-Reihenmotor kann auf diese Weise vollständig ausgeglichen werden. Bei einem Drei-Zylinder-Reihenmotor lassen sich die Massenkräfte 1. Ordnung und die Massenkräfte 2. Ordnung durch Wahl einer geeigneten Kurbelwellenkröpfung und einer geeigneten Zündfolge ebenfalls vollständig ausgleichen, nicht aber die Momente, welche durch die Massenkräfte hervorgerufen werden.

Ein vollständiger Massenausgleich, wie bei dem oben beschriebenen Sechs-Zylinder-Reihenmotor, ist nicht immer realisierbar, so dass weitere Maßnahmen ergriffen werden müssen, beispielsweise das Anordnen von Gegengewichten auf der Kurbelwelle und/oder die Ausstattung der Brennkraftmaschine mit mindestens einer Ausgleichswelle.

Die Massen des Kurbeltriebes, d. h. die Einzelmassen der Pleuelstange, des Kolbens, des Kolbenbolzens und der Kolbenringe, lassen sich in eine oszillierende Ersatzmasse und eine rotierende Ersatzmasse überführen. Die Massenkraft der rotierenden Ersatzmasse kann in einfacher Weise durch auf der Kurbelwelle angeordnete Gegengewichte in ihrer Außenwirkung ausgeglichen werden.

Aufwendiger gestaltet sich der Ausgleich der durch die oszillierende Ersatzmasse hervorgerufenen rotierenden Massenkraft. Die rotierenden Massenkräfte können durch die Anordnung von gegensinnig rotierenden mit entsprechenden Gewichten versehenen Ausgleichswellen ausgeglichen werden.

Selbst bei einem vollständigen Ausgleich der rotierenden Massenkräfte können sich Massenmomente ergeben, da die Massenkräfte der einzelnen Zylinder in den Zylindermittelebenen wirken. Diese Massenmomente können im Einzelfall wiederum durch eine mit Gewichten ausgestattete Ausgleichwelle kompensiert werden.

Das Vorsehen eines Massenausgleichs erhöht nicht nur den Raumbedarf und die Kosten, sondern auch den Kraftstoffverbrauch. Der erhöhte Kraftstoffverbrauch wird zum einen durch die zusätzlichen Gewichte verursacht, welche das Gesamtgewicht spürbar erhöhen. Zum anderen trägt der Massenausgleich nicht unwesentlich zur Reibleistung der Brennkraftmaschine bei.

Die vorstehenden Ausführungen machen deutlich, dass es vorteilhaft ist, die Masse des Kurbeltriebes zu reduzieren, wobei die Kurbelwelle als das Bauteil mit der größten Masse am meisten Potential für eine Gewichtseinsparung bietet. Die Verwendung einer hohlen Kurbelwelle führt zu einer reduzierten Masse des Kurbeltriebs und damit zu einer Reduzierung der für den Massenausgleich notwendigen Gegengewichte.

Gegebenenfalls kann infolge einer hohl ausgeführten Kurbelwelle auf einen Ausgleich der Massenkräfte ganz verzichtet werden, da die durch die Schwingungen hervorgerufenen Geräusche als unproblematisch bewertet werden und keine Anregung im Eigenfrequenzbereich zu befürchten ist.

Die durch Einsatz einer hohlen Kurbelwelle reduzierte Masse führt zu einer reduzierten Geräuschentwicklung und Geräuschemission.

Die Drehschwingungen der Kurbelwelle verursachen unerwünschte Drehzahlschwankungen der Kurbelwelle. Zur Minderung dieser Drehzahlschwankungen wird die Masse des Kurbeltriebs in der Regel durch die Anordnung eines Schwungrades auf der Kurbelwelle erhöht. Infolge der größeren Masse erhöht sich die Trägheit des Kurbeltriebs, der unempfindlicher gegenüber Drehzahlschwankungen ist, wodurch die Drehbewegung der Kurbelwelle gleichförmiger wird. Das Schwungrad wirkt sowohl bei Beschleunigungen als auch bei Verzögerungen für einen ruhigen und runden Lauf der Kurbelwelle und der mit der Kurbelwelle gekoppelten Bauteile.

Die Reduzierung der Masse des Kurbeltriebes durch Einsatz einer hohlen Kurbelwelle kann auch Vorteile bieten hinsichtlich der Problematik der vorstehend beschriebenen Drehzahlschwankungen und der Notwendigkeit eines Schwungrades.

Die vorstehenden Ausführungen machen deutlich, dass für Brennkraftmaschinen ein Bedarf an hohlen Kurbelwellen besteht.

Bei der konstruktiven Auslegung hohler Kurbelwellen bereitet insbesondere das Erfordernis nach einer ausreichenden Festigkeit der Welle Schwierigkeiten. Die Ausstattung der Kurbelwelle mit Hohlräumen zum Zwecke der Materialeinsparung bedingt eine komplexe Struktur der Welle. Dabei wird die mechanisch hochbeanspruchte Kurbelwelle als Folge der Materialeinsparung in ihrer Festigkeit geschwächt.

Als problematisch erweist sich insbesondere der Übergangsbereich zwischen einem Wellenabschnitt und der angrenzenden Kurbelwange. Im Rahmen der Herstellung der Kurbelwelle wird ein gegossener Kurbelwellenrohling nachbearbeitet, wobei unter anderem die mindestens zwei der Lagerung dienenden Wellenabschnitte eine definierte Länge und einen definierten Durchmesser erhalten. Die Länge eines Wellenabschnitts wird dabei häufig durch sogenannte Freistiche definiert, mit denen jeder Wellenabschnitt an seinen Enden im Übergangsbereich zu den Kurbelwangen versehen wird. Die Freistiche gewährleisten auch die Ausbildung eines vorgegebenen Durchmessers im Rahmen der Nachbearbeitung. Dabei erhält auch jede an einen Wellenabschnitt angrenzende Kurbelwange eine dem Wellenabschnitt zugewandte, ebene Seitenfläche, die senkrecht zur Längsachse der Kurbelwelle verläuft und die Kurbelwelle in Gestalt eines in Umfangsrichtung verlaufenden ringförmigen Bandes umschließt.

Die internationale Anmeldung WO 03/016730 A1 beschreibt eine hohle Kurbelwelle nach dem Stand der Technik, bei der das Band, welches die Seitenfläche bildet, ein Ring konstanter Breite ist.

Vor dem Hintergrund des Gesagten ist es eine Aufgabe der vorliegenden Erfindung, eine Brennkraftmaschine gemäß dem Oberbegriff des Anspruchs 1 bereitzustellen, die mit einer hohlen Kurbelwelle ausgestattet ist, welche gegenüber dem Stand der Technik verbessert ist.

Eine weitere Teilaufgabe der vorliegenden Erfindung besteht darin, ein Verfahren zum Herstellen der Kurbelwelle einer derartigen Brennkraftmaschine aufzuzeigen.

Gelöst wird die erste Teilaufgabe durch eine Brennkraftmaschine mit mindestens einem Zylinder und einer zu einem Kurbeltrieb gehörenden hohl ausgeführten Kurbelwelle, welche für jeden Zylinder eine dem Zylinder zugehörige Kurbelwellenkröpfung und mindestens zwei der Lagerung dienende definierte Wellenabschnitte, die entlang der Längsachse der Kurbelwelle beabstandet zueinander angeordnet sind, aufweist, wobei jede Kurbelwellenkröpfung zwei zueinander beabstandete und mittels Pleuellagerzapfen verbundene Kurbelwangen aufweist und jede an einen Wellenabschnitt angrenzende Kurbelwange eine dem Wellenabschnitt zugewandte, ebene und im Rahmen der Bearbeitung des Wellenabschnitts ausgebildete Seitenfläche, die senkrecht zur Längsachse verläuft und die Kurbelwelle in Gestalt eines in Umfangsrichtung verlaufenden ringförmigen Bandes umschließt, die dadurch gekennzeichnet ist, dass die in radialer Richtung gemessene Breite des die Seitenfläche bildenden Bandes mindestens einer Seitenfläche entlang des Umfanges variiert.

Die mindestens eine Kurbelwelle der erfindungsgemäßen Brennkraftmaschine hat eine gegenüber dem Stand der Technik veränderte Seitenfläche. Dadurch, dass die erfindungsgemäß ausgebildete Seitenfläche keine konstante Breite, sondern vielmehr eine entlang des Umfanges variierende Breite aufweist, läßt sich das lokale Widerstandmoment der Kurbelwelle, insbesondere das Widerstandsmoment im Übergangsbereich zwischen einem Wellenabschnitt und der angrenzenden Kurbelwange, beeinflussen und gezielt einstellen.

Vergleichsuntersuchungen haben gezeigt, dass sich durch geeignete Ausbildung der Seitenfläche die lokale Beanspruchung der Kurbelwelle im Übergangsbereich deutlich senken läßt; gleichgroße äußere Belastungen vorausgesetzt.

Dadurch wird die erste der Erfindung zugrunde liegende Aufgabe gelöst, nämlich eine Brennkraftmaschine bereitzustellen, die mit einer hohlen Kurbelwelle ausgestattet ist, welche gegenüber dem Stand der Technik verbessert ist.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen die in radialer Richtung gemessene Breite des die Seitenfläche bildenden Bandes jeder Seitenfläche entlang des Umfanges variiert.

Vorliegend wird die Breite entlang einer Geraden gemessen, die senkrecht auf der Längsachse der Kurbelwelle steht und diese Längsachse schneidet. Die auf dieser Geraden gemessene Wegstrecke, welche durch das Band verläuft, bildet die lokale Breite des Bandes, welche bei um die Welle rotierender Gerade variiert. Dies ist gleichbedeutend mit einer in Umfangrichtung bzw. entlang des Umfanges variierenden Breite.

Gemäß der in Rede stehenden Ausführungsform wird nicht nur mindestens eine Seitenfläche, sondern vielmehr jede Seitenfläche in der erfindungsgemäßen Weise ausgebildet, d. h. ausgeformt, nämlich in Gestalt eines ringförmigen Bandes, das die Welle in Umfangsrichtung umschließt und dessen Breite entlang des Umfanges variiert. Damit kann die lokale Beanspruchung in sämtlichen Übergangsbereichen der Kurbelwelle gesenkt werden.

Vorteilhaft sind Ausführungsformen der Brennkraftmaschine, bei denen die Hälfte der mindestens einen Seitenfläche, die auf der der Kurbelwellenkröpfung zugewandten Seite liegt, flächenmäßig größer ist als die Hälfte, die auf der der Kurbelwellenkröpfung abgewandten Seite liegt.

Vorliegend wird als Hälfte einer Seitenfläche ein bogenförmiges Segment bezeichnet, welches einen Winkel von 180° überstreicht. Beide Hälften bilden die Seitenfläche und überstreichen 360°, so dass die Seitenfläche definitionsgemäß die Kurbelwelle umschließt.

Gemäß der in Rede stehenden Ausführungsform soll der größere Anteil der Seitenfläche auf der der Kurbelwellenkröpfung zugewandten Seite liegen, während der Flächenanteil, der auf der der Kurbelwellenkröpfung abgewandten Seite liegt, die kleinere Hälfte bildet.

Vorteilhaft sind daher auch Ausführungsformen der Brennkraftmaschine, bei denen die Breite des Bandes der mindestens einen Seitenfläche ausgehend von der der Kurbelwellenkröpfung abgewandten Seite entlang des Umfanges in Richtung Kurbelwellenkröpfung zumindest abschnittsweise zunimmt.

Vorteilhaft sind insbesondere Ausführungsformen der Brennkraftmaschine, bei denen das die Seitenfläche bildende Band der mindestens einen Seitenfläche eine eiförmige Grundform mit herzförmiger Spitze aufweist, wobei die herzförmiger Spitze auf der der Kurbelwellenkröpfung zugewandten Seite liegt.

Vorteilhaft sind in diesem Zusammenhang Ausführungsformen der Brennkraftmaschine, bei denen das die Seitenfläche bildende Band der mindestens einen Seitenfläche im Bereich des Pleuellagerzapfens eine Ausnehmung aufweist. Dabei ist die mindestens eine Seitenfläche im Bereich des Pleuellagerzapfens gewissermaßen eingeschnürt.

Diese Form der Seitenfläche kann sich dadurch ergeben, dass der entsprechende Pleuellagerzapfen hohl ausgeführt ist und zu diesem Zwecke mit einer zentrischen Bohrung versehen ist, die an den Kurbelwangen der zugehörigen Kurbelwellenkröpfung austritt. Dabei verläuft die Seitenfläche auf der der Kurbelwellenkröpfung zugewandten Seite entlang eines bogenförmigen Abschnitts um die zentrische Bohrung herum, wobei der Rand der Seitenfläche in diesem Abschnitt nach innen, d. h. in Richtung Wellenlängsachse, gewölbt ist.

Vorteilhaft sind Ausführungsformen der Brennkraftmaschine, bei denen mindestens zwei der Lagerung dienende Wellenabschnitte hohl ausgeführt sind. Zumindest die an den beiden freien Enden der Welle vorgesehenen Wellenabschnitte lassen sich in einfacher Weise hohl ausführen, wobei die Hohlräume bereits im Rahmen des Gießvorganges beim Kurbelwellenrohling unter Verwendung von Kernen teilweise oder vollständig ausgebildet werden können. Alternativ lassen sich die Hohlräume auch im Rahmen einer Nachbearbeitung ausbilden.

Vorteilhaft sind in diesem Zusammenhang Ausführungsformen der Brennkraftmaschine, bei denen die mindestens zwei hohl ausgeführten Wellenabschnitte mit einer zentrischen Ausnehmung bzw. Bohrung versehen sind. Eine zentrische Bohrung läßt sich in einfacher Weise durch Bohren oder andere spanabhebende Verfahren erzeugen. Ein im Rahmen des Gießvorganges verwendeter Kern zur Ausbildung einer derartigen Bohrung läßt sich ohne weiteres nach dem Gießen entfernen.

Vorteilhaft sind auch Ausführungsformen der Brennkraftmaschine, bei denen der Pleuellagerzapfen mindestens einer Kurbelwellenkröpfung hohl ausgeführt ist.

Vorteilhaft sind in diesem Zusammenhang Ausführungsformen der Brennkraftmaschine, bei denen der mindestens eine hohl ausgeführte Pleuellagerzapfen mit einer zentrischen Ausnehmung bzw. Bohrung versehen ist, die an den Kurbelwangen der zugehörigen Kurbelwellenkröpfung austritt. Das im Zusammenhang mit hohl ausgeführten Wellenabschnitten bzw. der Ausbildung der dazugehörigen Hohlräume Gesagte gilt in analoger Weise.

Vorteilhaft sind in diesem Zusammenhang Ausführungsformen der Brennkraftmaschine, bei denen jeder an eine Kurbelwange angrenzende Wellenabschnitt an dem der Kurbelwange zugewandten Ende einen Freistich aufweist.

Die Freistiche dienen der Festlegung der Länge eines Wellenabschnitts, wobei die Länge des Abschnitts die Tragfähigkeit des Gleitlagers, welches der Wellenabschnitt im montierten Zustand der Kurbelwelle mit ausbildet, maßgeblich mitbestimmt. Zudem gestatten die Freistiche eine Bearbeitung der Oberfläche eines Wellenabschnitts.

Nichtsdestotrotz können auch Ausführungsformen der Brennkraftmaschine vorteilhaft sein, bei denen an eine Kurbelwange angrenzende Wellenabschnitte keinen Freistich aufweisen.

Die zweite der Erfindung zugrunde liegende Teilaufgabe, nämlich ein Verfahren zum Herstellen der Kurbelwelle einer Brennkraftmaschine einer zuvor genannten Art aufzuzeigen, wird gelöst mit einem Verfahren, das dadurch gekennzeichnet ist, dass
- in einem ersten Verfahrensschritt ein Rohling der hohlen Kurbelwelle gegossen wird, und
- in einem zweiten Verfahrensschritt die mindestens zwei der Lagerung dienenden Wellenabschnitte bearbeitet werden, wobei jeder Wellenabschnitt mit einer definierten Länge und einem definierten Durchmesser versehen wird, jeder an eine Kurbelwange angrenzende Wellenabschnitt an dem der Kurbelwange zugewandten Ende mit einem Freistich versehen wird und jede an einen Wellenabschnitt angrenzende Kurbelwange eine dem Wellenabschnitt zugewandte, ebene Seitenfläche erhält, die senkrecht zur Längsachse der Kurbelwelle verläuft und die Kurbelwelle in Gestalt eines in Umfangsrichtung verlaufenden ringförmigen Bandes umschließt, dessen in radialer Richtung gemessene Breite entlang des Umfanges variiert.

Das bereits für die erfindungsgemäße Brennkraftmaschine Gesagte gilt auch für das erfindungsgemäße Verfahren.

Die Herstellung der Kurbelwelle besteht in der Bearbeitung bzw. Nachbearbeitung eines zuvor im Gießverfahren ausgebildeten Rohlings. Um die erfindungsgemäße Seitenfläche ausbilden zu können, muß der Rohling schon mit einer entsprechenden Form versehen werden bzw. sein. Die durch Nachbearbeitung ausgebildete Seitenfläche als solche ist eine senkrecht auf der Längsachse stehende Schnittebene, welche einen Teil der gegossenen Kurbelwange abschneidet, d. h. abtrennt. Die Seitenfläche wird durch Abtragen von Material der Kurbelwange ausgebildet, weshalb die ursprüngliche Form der Kurbelwange die Gestalt der Seitenfläche maßgeblich mit beeinflußt.

Die Bearbeitung der mindestens zwei Wellenabschnitte erfolgt im Hinblick auf die Lagerung der Kurbelwelle, weshalb jeder Wellenabschnitt mit einer definierten Länge und einem definierten Durchmesser versehen wird, die wesentliche Kenngrößen der auszubildenden Gleitlagerung darstellen. In der Regel wird die Kurbelwelle in einem Kurbelgehäuse gelagert, wobei die obere Kurbelgehäusehälfte durch den Zylinderblock gebildet wird, welche durch die als Ölwanne dienende untere Kurbelgehäusehälfte ergänzt wird. Zur Aufnahme und Lagerung der Kurbelwelle sind mindestens zwei Lager im Kurbelgehäuse vorgesehen, die in der Regel zweiteilig ausgeführt sind und jeweils einen Lagersattel und einen mit dem Lagersattel verbindbaren Lagerdeckel umfassen. Die Kurbelwelle wird im Bereich der Wellenabschnitte, die entlang der Kurbelwellenachse beabstandet zueinander angeordnet und in der Regel als verdickte Wellenzapfen ausgebildet sind, gelagert. Dabei können Lagerdeckel und Lagersättel als separate Bauteile oder einteilig mit dem Kurbelgehäuse, d. h. den Kurbelgehäusehälften ausgebildet werden. Zwischen der Kurbelwelle und den Lagern können Lagerschalen als Zwischenelemente angeordnet werden.

Im montierten Zustand ist jeder Lagersattel mit dem korrespondierenden Lagerdeckel verbunden. Jeweils ein Lagersattel und ein Lagerdeckel bilden - gegebenenfalls im Zusammenwirken mit Lagerschalen als Zwischenelemente - eine Bohrung zur Aufnahme eines Wellenabschnitts. Die Bohrungen werden üblicherweise mit Motoröl, d. h. Schmieröl versorgt, so dass sich idealerweise zwischen der Innenfläche jeder Bohrung und dem dazugehörigen Wellenabschnitt bei umlaufender Kurbelwelle - ähnlich einem Gleitlager - ein tragfähiger Schmierfilm ausbildet.

Zur Versorgung der Lager mit Öl ist eine Pumpe zur Förderung von Motoröl zu den mindestens zwei Lagern vorgesehen, wobei die Pumpe via Versorgungsleitung eine Hauptölgalerie, von der Kanäle zu den mindestens zwei Lagern führen, mit Motoröl versorgt.

Vorteilhaft sind Ausführungsformen des Verfahrens, bei denen
- das die Seitenfläche bildende Band mindestens einer Seitenfläche eine eiförmige Grundform mit herzförmiger Spitze erhält, wobei die herzförmiger Spitze auf der der Kurbelwellenkröpfung zugewandten Seite liegt.

Die herzförmige Spitze führt dazu, dass die Breite des die Seitenfläche bildenden Bandes in unmittelbarer Nachbarschaft zur Kurbelwellenkröpfung abnimmt. Die Seitenfläche weist im Bereich des Pleuellagerzapfens gewissermaßen eine Einschnürung auf.

Beim Herstellen der Kurbelwelle einer Brennkraftmaschine mit drei Zylindern sind Ausführungsformen des Verfahrens vorteilhaft, bei denen die Kurbelwelle mit drei Kurbelwellenkröpfungen ausgebildet wird.

Sind die drei Zylinder in Reihe angeordnet, erweisen sich Varianten als vorteilhaft, bei denen die drei Kurbelwellenkröpfungen in Umfangsrichtung um 120° versetzt auf der Kurbelwelle angeordnet sind. Durch Wahl einer geeigneten Zündfolge lassen sich die Massenkräfte 1. Ordnung und die Massenkräfte 2. Ordnung dann vollständig ausgleichen. Im Einzelfall kann auf einen Ausgleich der Momente, welche durch die Massenkräfte hervorgerufen werden, verzichtet werden, wenn die Gewichtseinsparung durch Verwendung der hohl ausgeführten Kurbelwelle dies zuläßt, d. h. ausreichend umfangreich ausfällt.

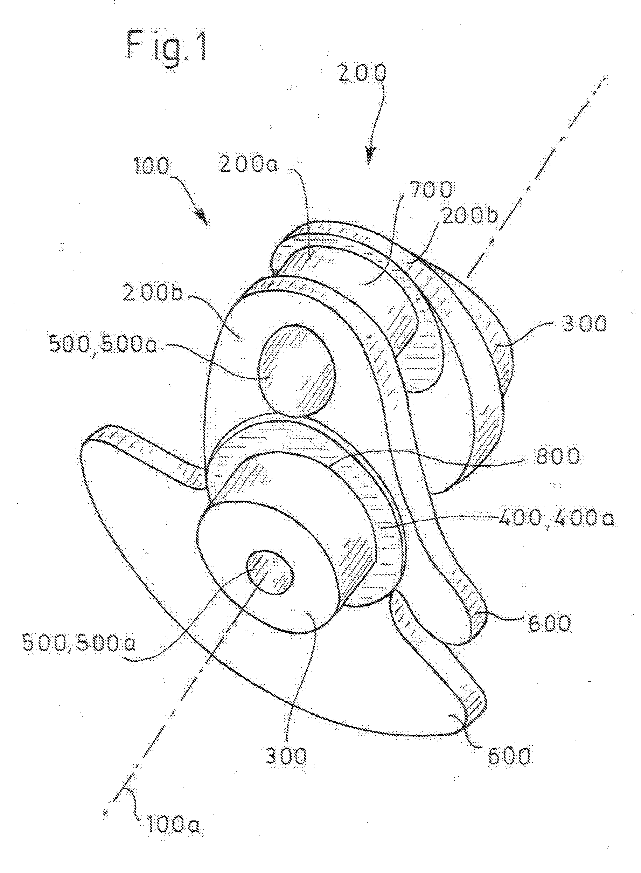

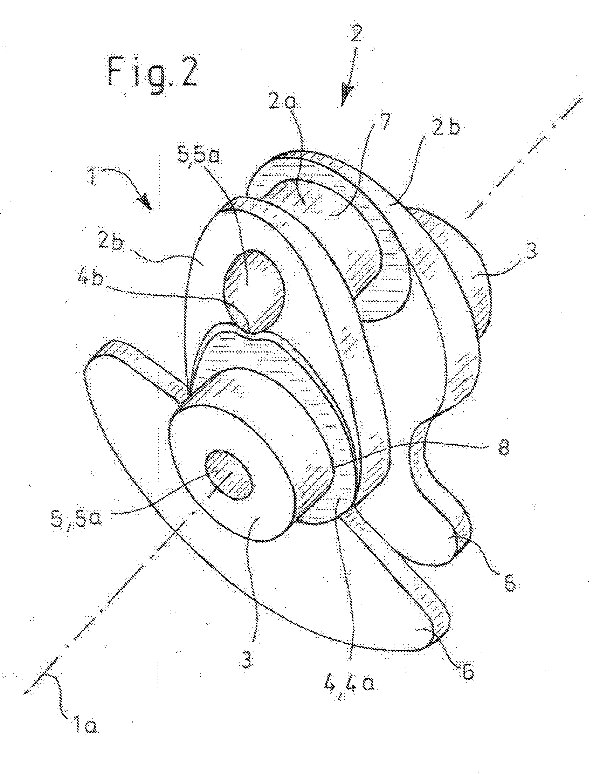

Im Folgenden wird die Erfindung anhand der Figuren 1 und 2 näher beschrieben. Hierbei zeigt:
- Fig. 1: einen Abschnitt einer herkömmlichen Kurbelwelle nach dem Stand der Technik in einer perspektivischen Darstellung, und
- Fig. 2: einen Abschnitt einer Kurbelwelle einer ersten Ausführungsform der Brennkraftmaschine in einer perspektivischen Darstellung.

Figur 1 zeigt einen Abschnitt einer herkömmlichen Kurbelwelle 100 nach dem Stand der Technik in einer perspektivischen Darstellung.

Der dargestellte Kurbelwellenabschnitt 100 umfaßt eine Kurbelwellenkröpfung 200 und zwei Wellenabschnitte 300, die entlang der Längsachse 100a der Kurbelwelle 100 beabstandet zueinander angeordnet sind und der Lagerung der Welle 100 dienen. Die Kurbelwellenkröpfung 200 umfaßt zwei zueinander beabstandete Kurbelwangen 200b, die mittels Pleuellagerzapfen 200a miteinander verbunden sind. Der Pleuellagerzapfen 200a ist mit einem Versorgungskanal 700 ausgestattet, welcher der Versorgung des großen Pleuellagers mit Öl dient. An der Kurbelwelle 100 angeordnete Gegengewichte 600 dienen dem Ausgleich der Massenkräfte der rotierenden Ersatzmasse.

Jede an einen Wellenabschnitt 300 angrenzende Kurbelwange 200b weist eine dem Wellenabschnitt 300 zugewandte, ebene und im Rahmen der Bearbeitung des Wellenabschnitts 300 ausgebildete Seitenfläche 400 auf, die senkrecht zur Längsachse 100a verläuft und die Kurbelwelle 100 in Gestalt eines in Umfangsrichtung verlaufenden ringförmigen Bandes 400a umschließt. Nach dem Stand der Technik ist das Band 400a, welches die Seitenfläche 400 bildet, ein Ring konstanter Breite. Jeder Wellenabschnitt 300 ist im Übergangsbereich zur angrenzenden Kurbelwange 200b mit einem Freistich 800 versehen.

Der in Figur 1 dargestellte Kurbelwellenabschnitt 100 ist hohl ausgeführt, wobei sowohl die zwei der Lagerung dienenden Wellenabschnitte 300 als auch der Pleuellagerzapfen 200a der Kurbelwellenkröpfung 200 einen Hohlraum 500 in Form einer zylinderförmigen Ausnehmung 500a aufweisen.

Figur 2 zeigt einen Abschnitt einer Kurbelwelle 1 einer ersten Ausführungsform der Brennkraftmaschine in einer perspektivischen Darstellung. Es sollen nur die Unterschiede zu der in Figur 1 dargestellten Ausführungsform gemäß dem Stand der Technik erörtert werden, weshalb im Übrigen Bezug genommen wird auf Figur 1. Für dieselben Bauteile wurden sich gegenseitig entsprechende Bezugszeichen verwendet.

Im Unterschied zu dem in Figur 1 dargestellten Abschnitt einer herkömmlichen Kurbelwelle sind bei dem in Figur 2 dargestellten Kurbelwellenabschnitt 1 an den Kurbelwangen 2b Seitenflächen 4 vorgesehen, bei denen die in radialer Richtung gemessene Breite des die Seitenfläche 4 bildenden Bandes 4a entlang des Umfanges variiert.

Das die Seitenfläche 4 bildende Band 4a weist im Bereich des Pleuellagerzapfens 2a eine Ausnehmung 4b auf, so dass die Seitenfläche 4 im Bereich des Pleuellagerzapfens 2a eingeschnürt ist. Dadurch erhält das die Seitenfläche 4 bildende Band 4a eine eiförmige Grundform mit herzförmiger Spitze, wobei die herzförmige Spitze auf der der Kurbelwellenkröpfung 2 zugewandten Seite liegt und zwar unmittelbar unterhalb der zylinderförmigen Ausnehmung 5a des hohlen Pleuellagerzapfens 2a. Der Hohlraum 5 tritt seitlich aus der Kurbelwange 2b aus, d. h. ist zur Kurbelwange 2b hin offen.

Eine in der beschriebenen Weise ausgebildete Seitenfläche 4 reduziert unter Last die Beanspruchung der Kurbelwelle 1 im Übergangsbereich.

### Bezugszeichen

- 1: Kurbelwelle, Kurbelwellenabschnitt
- 1a: Längsachse der Kurbelwelle
- 2: Kurbelwellenkröpfung
- 2a: Pleuellagerzapfen
- 2b: Kurbelwange
- 3: Wellenabschnitt
- 4: Seitenfläche
- 4a: Band
- 4b: Einschnürung, Ausnehmung
- 5: Hohlraum
- 5a: zylinderförmige Ausnehmung
- 6: Gegengewicht
- 7: Versorgungskanal
- 8: Freistich

### Stand der Technik

- 100: Kurbelwelle, Kurbelwellenabschnitt
- 100a: Längsachse der Kurbelwelle
- 200: Kurbelwellenkröpfung
- 200a: Pleuellagerzapfen
- 200b: Kurbelwange
- 300: Wellenabschnitt
- 400: Seitenfläche
- 400a: Band
- 500: Hohlraum
- 500a: zylinderförmige Ausnehmung
- 600: Gegengewicht
- 700: Versorgungskanal
- 800: Freistich

## Patentansprüche

1. Brennkraftmaschine mit mindestens einem Zylinder und einer zu einem Kurbeltrieb gehörenden hohl ausgeführten Kurbelwelle (1), welche für jeden Zylinder eine dem Zylinder zugehörige Kurbelwellenkröpfung (2) und mindestens zwei der Lagerung dienende definierte Wellenabschnitte (3), die entlang der Längsachse (1a) der Kurbelwelle (1) beabstandet zueinander angeordnet sind, aufweist, wobei jede Kurbelwellenkröpfung (2) zwei zueinander beabstandete und mittels Pleuellagerzapfen (2a) verbundene Kurbelwangen (2b) aufweist und jede an einen Wellenabschnitt (3) angrenzende Kurbelwange (2b) eine dem Wellenabschnitt (3) zugewandte, ebene und im Rahmen der Bearbeitung des Wellenabschnitts (3) ausgebildete Seitenfläche (4) aufweist, die senkrecht zur Längsachse (1a) verläuft und die Kurbelwelle (1) in Gestalt eines in Umfangsrichtung verlaufenden ringförmigen Bandes (4a) umschließt, **dadurch gekennzeichnet, dass** die in radialer Richtung gemessene Breite des die Seitenfläche (4) bildenden Bandes (4a) mindestens einer Seitenfläche (4) entlang des Umfanges variiert.

2. Brennkraftmaschine nach Anspruch 1, **dadurch gekennzeichnet, dass** die in radialer Richtung gemessene Breite des die Seitenfläche (4) bildenden Bandes (4a) jeder Seitenfläche (4) entlang des Umfanges variiert.

3. Brennkraftmaschine nach Anspruch 1 oder 2, **dadurch gekennzeichnet, dass** die Hälfte der mindestens einen Seitenfläche, (4) die auf der der Kurbelwellenkröpfung (2) zugewandten Seite liegt, flächenmäßig größer ist als die Hälfte, die auf der der Kurbelwellenkröpfung (2) abgewandten Seite liegt.

4. Brennkraftmaschine nach einem der vorherigen Ansprüche, **dadurch gekennzeichnet, dass** die Breite des Bandes (4a) der mindestens einen Seitenfläche (4) ausgehend von der der Kurbelwellenkröpfung (2) abgewandten Seite entlang des Umfanges in Richtung Kurbelwellenkröpfung (2) zumindest abschnittsweise zunimmt.

5. Brennkraftmaschine nach einem der vorherigen Ansprüche, **dadurch gekennzeichnet, dass** das die Seitenfläche (4) bildende Band (4a) der mindestens einen Seitenfläche (4) eine eiförmige Grundform mit herzförmiger Spitze aufweist, wobei die herzförmige Spitze auf der der Kurbelwellenkröpfung (2) zugewandten Seite liegt.

6. Brennkraftmaschine nach einem der vorherigen Ansprüche, **dadurch gekennzeichnet, dass** das die Seitenfläche (4) bildende Band (4a) der mindestens einen Seitenfläche (4) im Bereich des Pleuellagerzapfens (2a) eine Ausnehmung (4b) aufweist.

7. Brennkraftmaschine nach einem der vorherigen Ansprüche, **dadurch gekennzeichnet, dass** mindestens zwei der Lagerung dienende Wellenabschnitte (3) hohl ausgeführt sind.

8. Brennkraftmaschine nach Anspruch 7, **dadurch gekennzeichnet, dass** die mindestens zwei hohl ausgeführten Wellenabschnitte (3) mit einer zentrischen Ausnehmung (5a) versehen sind.

9. Brennkraftmaschine nach einem der vorherigen Ansprüche, **dadurch gekennzeichnet, dass** der Pleuellagerzapfen (2a) mindestens einer Kurbelwellenkröpfung (2) hohl ausgeführt ist.

10. Brennkraftmaschine nach Anspruch 9, **dadurch gekennzeichnet, dass** der mindestens eine hohl ausgeführte Pleuellagerzapfen (2a) mit einer zentrischen Ausnehmung (5a) versehen ist, die an den Kurbelwangen (2b) der zugehörigen Kurbelwellenkröpfung (2) austritt.

11. Brennkraftmaschine nach einem der vorherigen Ansprüche, **dadurch gekennzeichnet, dass** jeder an eine Kurbelwange (2b) angrenzende Wellenabschnitt (3) an dem der Kurbelwange (2b) zugewandten Ende einen Freistich (8) aufweist.

12. Verfahren zum Herstellen der Kurbelwelle (1) einer Brennkraftmaschine nach einem der vorherigen Ansprüche, **dadurch gekennzeichnet, dass**
- in einem ersten Verfahrensschritt ein Rohling der hohlen Kurbelwelle (1) gegossen wird, und
- in einem zweiten Verfahrensschritt die mindestens zwei der Lagerung dienenden Wellenabschnitte (3) bearbeitet werden, wobei jeder Wellenabschnitt (3) mit einer definierten Länge und einem definierten Durchmesser versehen wird, jeder an eine Kurbelwange (2b) angrenzende Wellenabschnitt (3) an dem der Kurbelwange (2b) zugewandten Ende mit einem Freistich (8) versehen wird und jede an einen Wellenabschnitt (3) angrenzende Kurbelwange (2b) eine dem Wellenabschnitt (3) zugewandte, ebene Seitenfläche (4) erhält, die senkrecht zur Längsachse (1a) der Kurbelwelle (1) verläuft und die Kurbelwelle (1) in Gestalt eines in Umfangsrichtung verlaufenden ringförmigen Bandes (4a) umschließt, dessen in radialer Richtung gemessene Breite entlang des Umfanges variiert.

13. Verfahren nach Anspruch 12, **dadurch gekennzeichnet, dass**
- das die Seitenfläche (4) bildende Band (4a) mindestens einer Seitenfläche (4) eine eiförmige Grundform mit herzförmiger Spitze erhält, bei der die herzförmige Spitze auf der der Kurbelwellenkröpfung (2) zugewandten Seite liegt.

14. Verfahren nach Anspruch 12 oder 13 zum Herstellen der Kurbelwelle (1) einer Brennkraftmaschine mit drei Zylindern, **dadurch gekennzeichnet, dass** die Kurbelwelle (1) mit drei Kurbelwellenkröpfungen (2) ausgebildet wird.

15. Verfahren nach Anspruch 14 zum Herstellen der Kurbelwelle (1) einer Brennkraftmaschine mit drei in Reihe angeordneten Zylindern, **dadurch gekennzeichnet, dass** die drei Kurbelwellenkröpfungen (2) in Umfangsrichtung um 120° versetzt auf der Kurbelwelle (1) angeordnet sind.

## Claims

1. Internal combustion engine with at least one cylinder and with a crankshaft (1) of hollow form which belongs to a crank mechanism and which has for each cylinder a crankshaft throw (2) associated with the cylinder and at least two defined shaft portions (3) which serve for mounting and which are arranged so as to be spaced apart from one another along the longitudinal axis (1a) of the crankshaft (1), each crankshaft throw (2) having two crank webs (2b) spaced apart from one another and connected by means of connecting rod bearing journals (2a), and each crank web (2b) adjacent to a shaft portion (3) having a planar side face (4) which faces the shaft portion (3) and is formed during the machining of the shaft portion (3) and which runs perpendicularly with respect to the longitudinal axis (1a) and surrounds the crankshaft (1) in the configuration of an annular band (4a) running in the circumferential direction, **characterized in that** the radially measured width of the band (4a), forming the side face (4), of at least one side face (4) varies along the circumference.

2. Internal combustion engine according to Claim 1, **characterized in that** the radially measured width of the band (4a), forming the side face (4), of each side face (4) varies along the circumference.

3. Internal combustion engine according to Claim 1 or 2, **characterized in that** that half of the at least one side face (4) which lies on the side facing the crankshaft throw (2) is larger in area than the half which lies on the side facing away from the crankshaft throw (2).

4. Internal combustion engine according to one of the preceding claims, **characterized in that** the width of the band (4a) of the at least one side face (4) increases at least in portions from the side facing away from the crankshaft throw (2) along the circumference in the direction of the crankshaft throw (2).

5. Internal combustion engine according to one of the preceding claims, **characterized in that** the band (4a), forming the side face (4), of the at least one side face (4) has an egg-shaped basic form with a heart-shaped tip, the heart-shaped tip lying on the side facing the crankshaft throw (2).

6. Internal combustion engine according to one of the preceding claims, **characterized in that** the band (4a), forming the side face (4), of the at least one side face (4) has a recess (4b) in the region of the connecting rod bearing journal (2a).

7. Internal combustion engine according to one of the preceding claims, **characterized in that** at least two shaft portions (3) serving for mounting are of hollow form.

8. Internal combustion engine according to Claim 7, **characterized in that** the at least two shaft portions (3) of hollow form are provided with a central recess (5a) .

9. Internal combustion engine according to one of the preceding claims, **characterized in that** the connecting rod bearing journal (2a) of at least one crankshaft throw (2) is of hollow form.

10. Internal combustion engine according to Claim 9, **characterized in that** the at least one connecting rod bearing journal (2a) of hollow form is provided with a central recess (5a) which emerges on the crank webs (2b) of the associated crankshaft throw (2).

11. Internal combustion engine according to one of the preceding claims, **characterized in that** each shaft portion (3) adjacent to a crank web (2b) has a relief groove (8) at the end facing the crank web (2b) .

12. Method for producing the crankshaft (1) of an internal combustion engine according to one of the preceding claims, **characterized in that**
- in a first method step, a blank of the hollow crankshaft (1) is cast, and
- in a second method step, the at least two shaft portions (3) serving for mounting are machined, each shaft portion (3) being provided with a defined length and a defined diameter, each shaft portion (3) adjacent to a crank web (2b) being provided with a relief groove (8) at the end facing the crank web (2b), and each crank web (2b) adjacent to a shaft portion (3) acquiring a planar side face (4) which faces the shaft portion (3) and which runs perpendicularly with respect to the longitudinal axis (1a) of the crankshaft (1) and surrounds the crankshaft (1) in the configuration of an annular band (4a) which runs in the circumferential direction and the radially measured width of which varies along the circumference.

13. Method according to Claim 12, **characterized in that**
- the band (4a), forming the side face (4), of at least one side face (4) acquires an egg-shaped basic form with a heart-shaped tip, the heart-shaped tip lying on the side facing the crankshaft throw (2).

14. Method according to Claim 12 or 13 for producing the crankshaft (1) of an internal combustion engine with three cylinders, **characterized in that** the crankshaft (1) is designed with three crankshaft throws (2).

15. Method according to Claim 14 for producing the crankshaft (1) of an internal combustion engine with three cylinders arranged in line, **characterized in that** the three crankshaft throws (2) are arranged on the crankshaft (1) so as to be offset at 120° in the circumferential direction.

## Revendications

1. Moteur à combustion interne comprenant au moins un cylindre et un vilebrequin (1) réalisé sous forme creuse et associé à un mécanisme d'embiellage, qui présente, pour chaque cylindre, un coudage de vilebrequin (2) associé au cylindre et au moins deux sections d'arbre définies (3) servant au support sur palier, lesquelles sont disposées à distance l'une de l'autre le long de l'axe longitudinal (1a) du vilebrequin (1), chaque coudage de vilebrequin (2) présentant deux flasques de vilebrequin (2b) espacés l'un de l'autre et connectés par le biais de tourillons de palier de bielle (2a) et chaque flasque de vilebrequin (2b) adjacent à une section d'arbre (3) présentant une face latérale plane (4) tournée vers la section d'arbre (3) et réalisée dans le cadre de l'usinage de la section d'arbre (3), laquelle s'étend perpendiculairement à l'axe longitudinal (1a) et entoure le vilebrequin (1) sous la forme d'une bande annulaire (4a) s'étendant dans la direction périphérique, **caractérisé en ce que** la largeur mesurée dans la direction radiale de la bande (4a) formant la face latérale (4) d'au moins une face latérale (4) varie le long de la périphérie.

2. Moteur à combustion interne selon la revendication 1, **caractérisé en ce que** la largeur mesurée dans la direction radiale de la bande (4a) formant la face latérale (4) de chaque face latérale (4) varie le long de la périphérie.

3. Moteur à combustion interne selon la revendication 1 ou 2, **caractérisé en ce que** la moitié de l'au moins une face latérale (4) qui est située du côté tourné vers le coudage de vilebrequin (2) a une superficie supérieure à celle de la moitié qui est située du côté opposé au coudage de vilebrequin (2) .

4. Moteur à combustion interne selon l'une quelconque des revendications précédentes, **caractérisé en ce que** la largeur de la bande (4a) de l'au moins une face latérale (4) augmente au moins en partie à partir du côté opposé au coudage de vilebrequin (2) le long de la périphérie dans la direction du coudage de vilebrequin (2).

5. Moteur à combustion interne selon l'une quelconque des revendications précédentes, **caractérisé en ce que** la bande (4a) formant la face latérale (4) de l'au moins une face latérale (4) présente une forme de base ovoïde avec une pointe en forme de coeur, la pointe en forme de coeur étant située du côté tourné vers le coudage de vilebrequin (2).

6. Moteur à combustion interne selon l'une quelconque des revendications précédentes, **caractérisé en ce que** la bande (4a) formant la face latérale (4) de l'au moins une face latérale (4) présente un évidement (4b) dans la région du tourillon de palier de bielle (2a) .

7. Moteur à combustion interne selon l'une quelconque des revendications précédentes, **caractérisé en ce qu'**au moins deux sections d'arbre (3) servant au support sur palier sont réalisées sous forme creuse.

8. Moteur à combustion interne selon la revendication 7, **caractérisé en ce que** les au moins deux sections d'arbre (3) réalisées sous forme creuse sont pourvues d'un évidement central (5a).

9. Moteur à combustion interne selon l'une quelconque des revendications précédentes, **caractérisé en ce que** le tourillon de palier de bielle (2a) d'au moins un coudage de vilebrequin (2) est réalisé sous forme creuse.

10. Moteur à combustion interne selon la revendication 9, **caractérisé en ce que** l'au moins un tourillon de palier de bielle (2a) réalisé sous forme creuse est pourvu d'un évidement central (5a) qui débouche au niveau des flasques de vilebrequin (2b) du coudage de vilebrequin associé (2).

11. Moteur à combustion interne selon l'une quelconque des revendications précédentes, **caractérisé en ce que** chaque section d'arbre (3) adjacente à un flasque de vilebrequin (2b) présente un dégagement par rainure (8) à l'extrémité tournée vers le flasque de vilebrequin (2b).

12. Procédé de fabrication du vilebrequin (1) d'un moteur à combustion interne selon l'une quelconque des revendications précédentes, **caractérisé en ce que**
- dans une première étape de procédé, une ébauche du vilebrequin creux (1) est coulée, et
- dans une deuxième étape de procédé, les au moins deux sections d'arbre (3) servant au support sur palier sont usinées, chaque section d'arbre (3) étant pourvue d'une longueur définie et d'un diamètre défini, chaque section d'arbre (3) adjacente à un flasque de vilebrequin (2b) à l'extrémité tournée vers le flasque de vilebrequin (2b) étant pourvue d'un dégagement par rainure (8) et chaque flasque de vilebrequin (2b) adjacent à une section d'arbre (3) étant réalisé avec une face latérale plane (4) tournée vers la section d'arbre (3), laquelle s'étend perpendiculairement à l'axe longitudinal (1a) du vilebrequin (1) et entoure le vilebrequin (1) sous la forme d'une bande (4a) annulaire s'étendant dans la direction périphérique, dont la largeur mesurée dans la direction radiale varie le long de la périphérie.

13. Procédé selon la revendication 12, **caractérisé en ce que**
- la bande (4a) formant la face latérale (4) d'au moins une face latérale (4) est réalisée avec une forme de base ovoïde avec une pointe en forme de coeur, la pointe en forme de coeur étant située du côté tourné vers le coudage de vilebrequin (2) .

14. Procédé selon la revendication 12 ou 13 pour la fabrication du vilebrequin (1) d'un moteur à combustion interne comprenant trois cylindres, **caractérisé en ce que** le vilebrequin (1) est réalisé avec trois coudages de vilebrequin (2).

15. Procédé selon la revendication 14 pour la fabrication du vilebrequin (1) d'un moteur à combustion interne comprenant trois cylindres disposés en ligne, **caractérisé en ce que** les trois coudages de vilebrequin (2) sont disposés sur le vilebrequin (1) de manière décalée de 120° dans la direction périphérique.
